Europäisches Patentamt

(19) European Patent Office

Office européen des brevets

(11) Publication number: **0 287 171 B1**

(12) **EUROPEAN PATENT SPECIFICATION**

(45) Date of publication of patent specification :
16.10.91 Bulletin 91/42

(51) Int. Cl.⁵ : **B65G 47/54,** B65G 13/10

(21) Application number : 88200693.5

(22) Date of filing : 12.04.88

(54) Conveyor.

(30) Priority : 16.04.87 NL 8700901

(43) Date of publication of application :
19.10.88 Bulletin 88/42

(45) Publication of the grant of the patent :
16.10.91 Bulletin 91/42

(84) Designated Contracting States :
AT BE CH DE ES FR GB GR IT LI LU NL SE

(56) References cited :
FR-A- 1 559 270
FR-E- 63 816
GB-A- 1 143 159

(73) Proprietor : RAPISTAN VAN DER LANDE B.V.
Rapistanlaan 2
NL-5466 RB Veghel (NL)

(72) Inventor : van den Goor, Jacobus Marie
Boxhornpad 6
NL-5641 WG Eindhoven (NL)

(74) Representative : Noz, Franciscus Xaverius, Ir.
et al
Algemeen Octrooibureau P.O. Box 645
NL-5600 AP Eindhoven (NL)

## Description

The invention relates to a conveyor provided with one or more transport means for moving objects in the longitudinal direction of the conveyor and with a rotatable body provided with a smooth surface and having its axis of rotation extending substantially parallel to the longitudinal direction of the conveyor and being adjustable in a substantially vertical direction between an operative position wherein the rotatable body extends partly above the transport means and an inoperative position, whereby in the operative position, in the direction in which the objects are moved by the conveyor during operation, the upper boundary line of the superficies of the rotatable body slopes upwards so that an object can be moved transversely to the longitudinal direction of the conveyor by means of said rotatable body.

FR-A-1.559.270 discloses such a conveyor having cylindrical rotatable bodies.

Now according to the invention the rotatable body is conical the apex angle of the conical superficies being located at the upstream end of the rotatable body.

By using a conical body the speed with which the object will be driven in lateral direction relatively to the longitudinal direction of the conveyor belt will increase evenly at the same time, because of the gradually increasing outer circumference of the cone, seen in the direction of movement of the object.

It is noted that GB-A-1.143.159 shows a conveyor system comprising a plurality of conical rollers arranged in an arc between two intersecting straight line conveyor sections, said rollers comprising peripheral grooves through which parts of a conveyor section extend. The conical rollers are movable up and down between an operative and an inoperative position.

The invention will be further explained hereinafter with reference to a few embodiments of the construction according to the invention diagrammatically illustrated in the accompanying figures.

Fig. 1 is a perspective view of a conveyor according the invention.

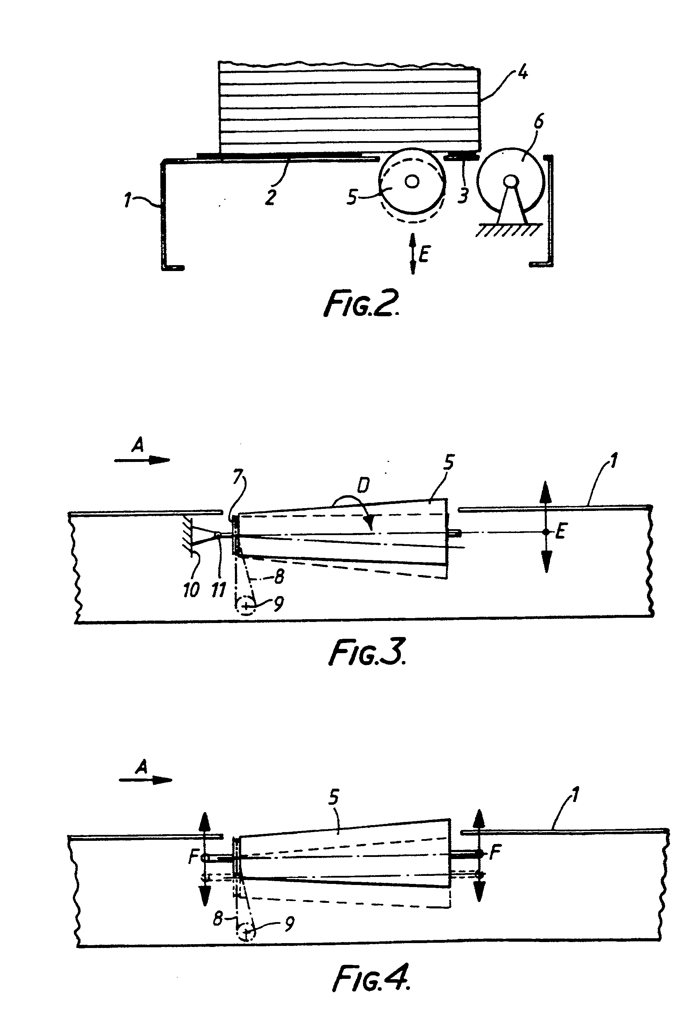

Fig. 2 is a diagrammatic cross-section of the conveyor illustrated in fig. 1.

Fig. 3 is a diagrammatic longitudinal section of fig. 2, in which a first possibility for adjusting a conical body is illustrated.

Fig. 4 is a longitudinal section corresponding with fig. 3, in which another possibility for adjusting the conical body is diagrammatically illustrated.

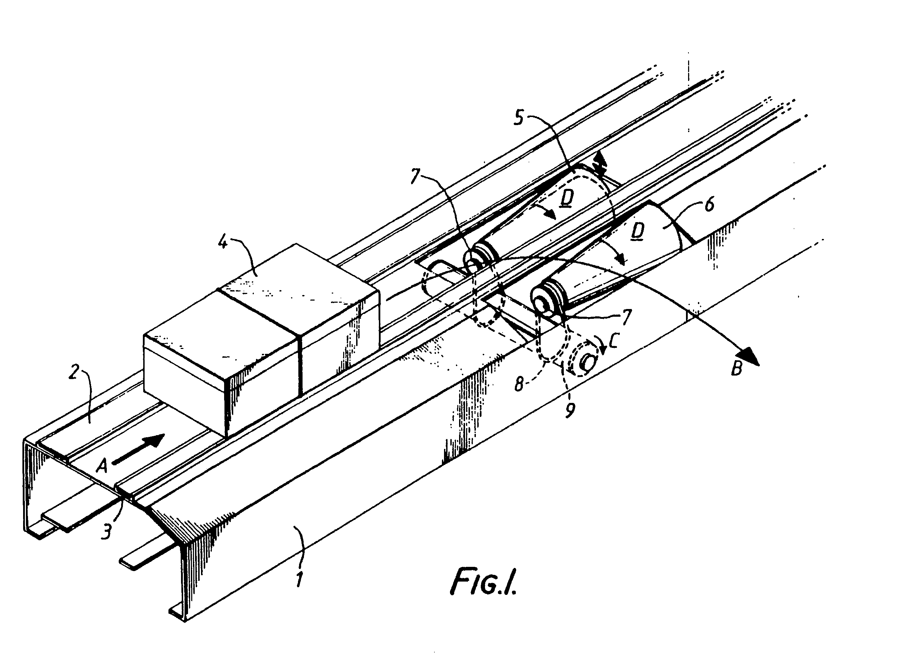

Fig. 1 illustrates a part of a frame 1 of a conveyor. The conveyor is provided with a pair of endless belts 2 and 3 extending parallel to each other, which belts are driven by means of driving means (not shown), such that the upper parts of said belts 2 and 3 move over the upper side of the frame 1 in the direction according to arrow A. During operation objects 4 present on the belts 2 and 3 can be moved by means of said belts, therefore, in the direction according to arrow A in the longitudinal direction of the conveyor.

As already noted above it will also be possible to use e.g. driven rolls instead of belts for moving the objects 4 in the direction according to arrow A.

When such conveyors are used it is often desirable to be able to discharge certain objects laterally at certain position along the length of the conveyor, as is indicated by means of the arrow B in fig 1. As is illustrated in fig 1 a pair of conical bodies 5 and 6 are provided for this purpose, which bodies are arranged such that the central axes of said conical bodies extend parallel to the longitudinal direction of the conveyor, seen in top view. The conical body 5 is thereby located between the two conveyor belts 2 and 3 in the path of the objects moved by the conveyor belts 2 and 3 in the direction according to arrow A, whilst the conical element 6 is arranged beside said path.

As furthermore appears from fig 1 the arrangement of the elements 5 and 6 having the shape of truncated cones is such that the part having the smallest diameter is located upstream, in the direction of movement according to arrow A, therefore the apex angle of the superficies of a conical body is also located upstream of the relevant conical body, seen in the above-mentioned direction A.

Pulleys 7 are furthermore fitted to the upstream ends of the conical elements, which pulleys are coupled, by means of belts 8, to a horizontally extending roll 9, which is supported freely rotatably by the frame 1. The roll 9 thereby extends perpendicularly to the longitudinal direction of the belts 2 and 3 and during operation said roll will be set rotating by the lower parts of the belts 2 and/or 3 in the direction according to arrow C. It will be apparent that in that case the conical bodies 5 and 6 are set into rotation via the belts 8, in the direction according to arrow D.

As the conical body 6 is located outside the path in which the objects 4 move in the direction according to arrow A said body 6 can generally take a fixed position. If desired said conical body 6 may also be provided adjustably in vertical direction, however, as will be further described hereinafter for the conical body 5.

As is diagrammatically illustrated in fig 3 the body 5 may be coupled, near its end supporting the pulley 7, to a support 10 fixed to the frame 1, such that the body 5 is pivotable, by means of means not shown, about a pivot axis 11 extending transversely to the longitudinal direction of the conveyor, as indicated by the double arrow E. Thereby the construction is such that in a first position, illustrated by means of dotted lines, the upper boundary lines of the superficies of the conical body 5 will be located under the upper surfaces of the transport means supporting the objects 4, in this case the upper surfaces of the conveyor belts 2 and 3. The objects 4 moved by the conveyor belts 2 and 3 can then pass the conical body 5 in the direction according to arrow A without impediment.

In the position illustrated by means of full lines the conical body 5 projects partly above the upper surfaces of the belts 2 and 3, however, whereby preferably care is taken that the uppermost point of the upstream end of the conical body is located at least substantially at the same level as the upper surface of the belts 2 and 3, whilst the upper boundary line of the conical body then extends gradually upwards from this point, as is apparent from fig 3.

In this position of the conical body 5 an object 4 supplied by means of the belts 2 and 3 will be moved gradually, without sudden transition in direction, onto the upwardly sloping upper part of the conical body rotating in the direction according to arrow D, whereby the front edge of the object 4 will remain in constant contact with said conical body. Because of the increase in the diameter of the conical body seen in the direction of movement of the object, the peripheral velocity of the part of the conical body with which the front edge of the object 4 is in touch will gradually increase, as the object 4 is moved further over the conical body 5 in the direction of the end of said conical element that extends downstream. It will be apparent that as a result of that also the velocity with which the object is by-passed in the direction according to arrow B (fig 1) gradually increases. At a certain moment the object will also get in touch with the conical body 6 arranged beside the conical body 5, which conical body 6 will then contribute towards a lateral discharge of the object 4 in the direction according to arrow B.

It will be apparent that thus a quick lateral discharge of an object 4 in the direction according to arrow B can be effected in a very even and effective manner, without the object 4 being subjected to bumps or abrupt changes in velocity thereby.

Furthermore it will be apparent that beside the conveyor illustrated in fig 1 further transport means, chutes or the like, extending transversely to the longitudinal direction of the conveyor, may be arranged for the further transport of the object discharged from the conveyor in the direction according to arrow B.

Of course variations and/or additions to the embodiment described above will be possible within the spirit and scope of the invention.

As is e.g. indicated in fig 4 the conical body 5 may also be moved parallel to itself by means of adjusting means (not shown), in the direction according to arrow F, between the inactive position illustrated by dotted lines in fig 4, and the active position illustrated by full lines, instead of being pivoted between an inactive position illustrated by dotted lines and an active position illustrated by full lines.

When the driving mechanism for the conical body 5 is made reversible and additional conical bodies 6 are possibly arranged on both sides of the conical body 5, which conical bodies 6 may rotate in opposite directions, an object can be discharged at a certain location along the length of the conveyor at the one side or at the other side of the conveyor, whichever is desired.

When a discharge to both sides is desired it may be simpler, however, to arrange two conical bodies 5 in line, seen in the longitudinal direction of the conveyor, whereby the one conical body rotates in the one direction and the other conical body rotates in the other direction during operation.

Although it is generally preferred to arrange the axes of rotation of the bodies 5 and 6 parallel to the longitudinal axis of the conveyor, seen in top view, it will also be possible to arrange the conical bodies and their axes of rotation in a direction slightly deviating from said parallel arrangement.

## Claims

1. Conveyor provided with one or more transport means (2, 3) for moving objects (4) in the longitudinal direction of the conveyor and with a rotatable body (5, 6) provided with a smooth surface and having its axis of rotation extending substantially parallel to the longitudinal direction of the conveyor and being adjustable in a substantially vertical direction between an operative position, wherein the rotatable body (5, 6) extends partly above the transport means (2, 3) and an inoperative position below said transport means, whereby in the operative position, in the direction (A) in which the objects are moved by the conveyor during operation, the upper boundary line of the superficies of the rotatable body (5, 6) slopes upwards so that an object (4) can be moved transversely to the longitudinal direction of the conveyor by means of said rotatable body (5, 6), characterised in that the rotatable body (5, 6) is conical the apex angle of the conical superficies being located at the upstream end of the rotatable body (5, 6).

2. Conveyor according to claim 1, characterised in that a pair of rotatable bodies (5, 6) are arranged at least substantially parallel to each other and side by side.

3. Conveyor according to claim 2, characterised in that one of the rotatable bodies (5, 6) is arranged beside the path in which the objects (4) are moved by the conveyor.

4. Conveyor according to any one of the preceding claims, characterised in that the rotatable body (5, 6) is pivotable about a pivot axis (11) extending transversely to the longitudinal direction of the rotatable body (5, 6), said pivot axis (11) being located near the upstream end of the rotatable body (5, 6).

5. Conveyor according to any one of the preceding claims 1-4, characterised in that the rotatable body (5, 6) is adjustable in vertical direction, parallel to itself.

6. Conveyor according to any one of the preceding claims, characterised in that in the active position of the rotatable body (5, 6) the uppermost point of the upstream end of the rotatable body (5, 6) is located at least substantially in one plane with those parts of the transport means (2, 3) which support an object (4) to be moved.

## Patentansprüche

1. Förderer, der mit einer oder mehreren Fördereinrichtungen (2, 3) zur Bewegung von Gegenständen (4) in Längsrichtung des Förderers und mit einem drehbaren Körper (5, 6) versehen ist, der eine glatte Oberfläche besitzt und dessen Drehachse im wesentlichen parallel zur Längsrichtung des Förderers verläuft und in einer im wesentlichen vertikalen Richtung zwischen einer Betriebsstellung, in der sich der drehbare Körper (5, 6) zum Teil über die Fördereinrichtungen (2, 3) erstreckt, und einer Außerbetriebsstellung unterhalb der Fördereinrichtungen verstellbar ist, wobei in der Betriebsstellung in der Richtung (A), in der die Gegenstände vom Förderer während des Betriebes bewegt werden, die obere Grenzlinie der Außenseite des drehbaren Körpers (5, 6) nach oben geneigt ist, so daß ein Gegenstand (4) in Querrichtung zur Längsrichtung des Förderers mit Hilfe des drehbaren Körpers (5, 6) bewegt werden kann, **dadurch gekennzeichnet**, daß der drehbare Körper (5, 6) konisch ist und daß sich der Öffnungswinkel der konischen Oberfläche am aufstromseitigen Ende des drehbaren Körpers (5, 6) befindet.

2. Förderer nach Anspruch 1, **dadurch gekennzeichnet**, daß ein Paar von drehbaren Körpern (5, 6) mindestens im wesentlichen parallel zueinander und Seite an Seite angeordnet ist.

3. Förderer nach Anspruch 2, **dadurch gekennzeichnet**, daß einer der drehbaren Körper (5, 6) neben der Bahn, in der die Gegenstände (4) vom Förderer bewegt werden, angeordnet ist.

4. Förderer nach einem der vorangehenden Ansprüche, **dadurch gekennzeichnet**, daß der drehbare Körper (5, 6) um eine Schwenkachse (11) schwenkbar ist, die sich quer zur Längsrichtung des drehbaren Körpers (5, 6) erstreckt und in der Nähe des aufstromseitigen Endes des drehbaren Körpers (5, 6) angeordnet ist.

5. Förderer nach einem der vorangehenden Ansprüche 1 bis 4, **dadurch gekennzeichnet**, daß der drehbare Körper (5, 6) in Vertikalrichtung parallel zu sich selbst verstellbar ist.

6. Förderer nach einem der vorangehenden Ansprüche, **dadurch gekennzeichnet**, daß in der aktiven Stellung des drehbaren Körpers (5, 6) der oberste Punkt des aufstromseitigen Endes des drehbaren Körpers (5, 6) mindestens im wesentlichen mit denjenigen Teilen der Fördereinrichtungen (2, 3), die einen zu bewegenden Gegenstand (4) lagern, in einer Ebene angeordnet ist.

## Revendications

1. Convoyeur équipé d'un ou de plusieurs moyens de transport (2, 3) pour déplacer des objets (4) dans la direction longitudinale du convoyeur et comportant un corps rotatif (5, 6) possédant une surface lisse et dont l'axe de rotation est sensiblement parallèle à la direction longitudinale du convoyeur et est réglable dans une direction sensiblement verticale entre une position active, dans laquelle le corps rotatif (5, 6) s'étend en partie au-dessus des moyens de transport (2, 3), et une position inactive au-dessous desdits moyens de transport, auquel cas, dans la position active, dans la direction (A) dans laquelle les objets sont déplacés par le convoyeur pendant le fonctionnement, la ligne limite supérieure des surfaces du corps rotatif (5, 6) s'étend obliquement vers le haut de sorte qu'un objet (4) peut être déplacé transversalement par rapport à la direction longitudinale du convoyeur au moyen dudit corps rotatif (5, 6), caractérisé en ce que le corps rotatif (5, 6) est conique, l'angle au sommet des surfaces coniques étant situé au niveau de l'extrémité amont du corps rotatif (5, 6).

2. Convoyeur selon la revendication 1, caractérisé en ce qu'un couple de corps rotatifs (5, 6) sont disposés au moins sensiblement parallèlement l'un à l'autre et côte-à-côte.

3. Convoyeur selon la revendication 2, caractérisé en ce que l'un des corps rotatifs (5, 6) est disposé à côté du trajet sur lequel les objets (4) sont déplacés par le convoyeur.

4. Convoyeur selon l'une quelconque des revendications précédentes, caractérisé en ce que le corps rotatif (5, 6) peut pivoter autour d'un axe de pivotement (11) qui s'étend transversalement par rapport à la direction longitudinale du corps rotatif (5, 6), ledit axe de pivotement (11) étant situé à proximité de l'extrémité amont du corps rotatif (5, 6).

5. Convoyeur selon l'une quelconque des revendications précédentes 1-4, caractérisé en ce que le corps rotatif (5, 6) est réglable parallèlement à lui-même, dans la direction verticale.

6. Convoyeur selon l'une quelconque des revendications précédentes, caractérisé en ce que lorsque le corps rotatif (5, 6) est dans la position active, le point le plus élevé de l'extrémité amont du corps rotatif (5, 6) est situé au moins sensiblement dans un plan avec les parties des moyens de transport (2, 3) qui supportent un objet (4) devant être déplacé.

Fig.I.

EP 0 287 171 B1

FIG.2.

FIG.3.

FIG.4.

6